# EUROPÄISCHE PATENTANMELDUNG

(11) **EP 0 997 681 A2**
(43) Veröffentlichungstag der Anmeldung: **03.05.2000**
(21) Anmeldenummer: 99120476.9
(22) Anmeldetag: 14.10.1999
(51) Int. Cl.: F17C 1/00, F17C 13/00

(54) **Speicherbehälter für verflüssigte Gase**

(30) Priorität: 28.10.1998 DE 19849767
(71) Anmelder: Linde Aktiengesellschaft, 65189 Wiesbaden (DE)
(72) Erfinder: Rüdiger, Horst, Dipl.-Ing., 86163 Augsburg (DE); Reese, Wilfried-Henning, Dipl.-Ing., 85716 Unterschleissheim (DE); Sillat, Diethard, Dipl.-Ing., 82152 Planegg (DE)
(74) Vertreter: Kasseckert, Rainer

(57) **Zusammenfassung**

Die Erfindung betrifft einen Speichertank (1), insbesondere für verflüssigte Gase, der durch eine Vielzahl von Trennwänden (2) in Zellen unterteilt ist. Die Trennwände (2) bestehen erfindungsgemäß aus einem schlecht wärmeleitenden Material und die maximale Ausdehnung der Zellen in einer Ebene senkrecht zu den Trennwänden (2) ist kleiner als 50 mm.

## Beschreibung

Die Erfindung betrifft einen Speichertank, insbesondere für verflüssigte Gase, der durch eine Vielzahl von Trennwänden in Zellen unterteilt ist.

Angesichts der verkehrsbedingten Immisionsbelastungen wird in Zukunft in zunehmendem Maße Wasserstoff als Kraftstoff für Kraftfahrzeuge, Flugzeuge und Schiffe eingesetzt werden. Die Speicherung des Wasserstoffs an Bord dieser Fahrzeuge erfolgt zweckmäßigerweise in flüssiger Form, da aufgrund der geringen Dichte von gasförmigem Wasserstoff die Speicherkapazität ansonsten nur sehr begrenzt wäre. Der Wasserstoff wird daher auf etwa 25 K abgekühlt und in den auf dem Fahrzeug befindlichen Speichertank bei einem Druck von 3 bis 4 bar eingeleitet.

Wird als Antriebsaggregat ein Verbrennungsmotor eingesetzt, so ist der Fülldruck von 3 bis 4 bar für einen ordnungsgemäßen Betrieb des Motors gerade ausreichend. Beim Einsatz von Brennstoffzellen als Fahrzeugantrieb ist dagegen derzeit eine Wasserstoffzufuhr unter einem Druck von 10 bar erforderlich. Eine Speicherung des Wasserstoffs bei einem Druck von 10 bar und einer entsprechenden Gleichgewichtstemperatur von etwa 31 K ist allerdings nachteilig, da die Speicherkapazität aufgrund der sich mit steigender Temperatur verringernden Dichte des flüssigen Wasserstoffs deutlich sinkt.

In der Praxis wird daher der bei einem Druck von 3 bis 4 bar gespeicherte Wasserstoff zunächst auf 10 bar verdichtet, bevor er der Brennstoffzelle zugeführt werden kann. Die Druckerhöhung kann beispielsweise durch Einleiten zusätzlichen gasförmigen Wasserstoffs in den Speichertank oder durch Verdampfen eines Teils des flüssigen Wasserstoffs erreicht werden. Eine derartige Vorrichtung zum Druckaufbau mittels einer Mammutpumpe, welche flüssigen Wasserstoff nach oben in den Gasraum fördert und an deren oberem Ende eine Verdampfer-Heizung zur Verdampfung des flüssigen Wasserstoffs vorgesehen ist, ist beispielsweise aus der DE 42 12 626 A1 bekannt.

Nach der Druckerhöhung befinden sich allerdings der flüssige und der gasförmige Wasserstoff im Speichertank im thermischen Ungleichgewicht, da die Flüssigkeit eine Temperatur von etwa 25 K aufweist, während in der Gasatmosphäre eine Temperatur von 31 K vorliegt. Das in dem Tank vorliegende thermodynamische System ist daher bestrebt, durch Rückkondensation von Wasserstoffgas eine Angleichung der thermischen Verhältnisse von Gas und Flüssigkeit herbeizuführen.

Die Rückkondensation und die daraus resultierende Druckerniedrigung können dadurch verhindert werden, daß zumindest die oberste Flüssigkeitsschicht mit dem Gas in thermisches Gleichgewicht gebracht und dieses aufrechterhalten wird. Eine Erwärmung der gesamten Flüssigkeit ist dagegen aus den oben genannten Gründen verringerter Speicherkapazität unerwünscht.

Aufgabe vorliegender Erfindung ist es daher, eine Vorrichtung der eingangs genannten Art zu schaffen, die es ermöglicht, eine in der in dem Speicherbehälter befindlichen Flüssigkeit bestehende Temperaturschichtung aufrechtzuerhalten.

Diese Aufgabe wird erfindungsgemäß dadurch gelöst, daß die Trennwände aus einem schlecht wärmeleitenden Material bestehen und die maximale Ausdehnung der Zellen in einer Ebene senkrecht zu den Trennwänden kleiner als 50 mm ist.

Erfindungsgemäß wird das Innere des Speicherbehälters durch eine Vielzahl von Trennwänden in einzelne Zellen unterteilt, wodurch der Flüssigkeitstransport innerhalb des Speicherbehälters in einer Ebene senkrecht zu den Trennwänden stark eingeschränkt wird. Der Abstand der einzelnen Trennwände wird so gewählt, daß auch innerhalb der einzelnen Zellen, d.h. in einer Ebene parallel zu den Trennwänden, Flüssigkeitsbewegungen unterdrückt werden. Es hat sich gezeigt, daß es hierzu notwendig ist, die maximale Ausdehnung der Zellen auf 50 mm zu begrenzen. Vorzugsweise wird die Ausdehnung der Zellen in einer Ebene senkrecht zu den Trennwänden sogar kleiner als 10 mm, besonders bevorzugt kleiner als 5 mm gehalten. Aufgrund des Einsatzes von Trennwänden in dem Speicherbehälter und der erfindungsgemäßen Dimensionierung der daraus resultierenden Zellen wird daher sichergestellt, daß eine in der in dem Speicherbehälter gespeicherten Flüssigkeit bereits vorliegende oder gezielt herbeigeführte Temperaturschichtung bestehen bleibt.

Der Wärmeaustausch zwischen den in benachbarten Zellen gespeicherten Flüssigkeitsteilmengen wird erfindungsgemäß dadurch verringert, daß die Trennwände aus einem schlecht wärmeleitenden Material bestehen. Die in den einzelnen Zellen gespeicherten Flüssigkeitsteilmengen sind somit thermisch im wesentlichen entkoppelt. Die Trennwände schließen jedoch von Vorteil nicht dicht mit den Wänden des Speicherbehälters ab, so daß die Flüssigkeit jeweils am Stoß zwischen den Trennwänden und der Behälterwand von einer Zelle in die benachbarte Zelle fließen kann. Diese flüssigkeitsseitige Verbindung der einzelnen Zellen erlaubt es, gemeinsame Zu- und Ableitungen sowie Kontrollvorrichtungen, wie z. B. Flüssigkeitsstandsensoren, für alle Zellen vorzusehen.

Es hat sich gezeigt, daß es günstig ist, Trennwände aus Kunststoff oder einem in Harz oder einer ähnlichen Substanz getränkten Gewebe vorzusehen, da diese Materialien schlecht wärmeleitend, leicht, preiswert und einfach zu verarbeiten sind. Die Trennwände sind entweder gänzlich flüssigkeitsundurchlässig, oder sie besitzen Öffnungen, die nur einen eingeschränkten Flüssigkeitsdurchtritt durch die Trennwände erlauben.

Von Vorteil besitzen die Zellen einen drei-, vier- oder sechseckigen Querschnitt, da mit diesen zum einen der Speicherbehälter gleichmäßig ausgefüllt werden kann, zum anderen derartige Zellen relativ einfach herstellbar sind. Hierzu werden mehrere Trennwände aufeinandergelegt, in bestimmten Abständen miteinander verklebt und anschließend die nicht verklebten Bereiche auseinandergezogen, so daß sich Zellen ergeben. Auch der Einsatz von Zellen mit rundem Querschnitt ist aus produktionstechnischen Gründen vorteilhaft.

Die Trennwände sind vorzugsweise im wesentlichen senkrecht angeordnet, so daß sich schmale, hohe Zellen ergeben. Die Zellen erstrecken sich in diesem Fall bevorzugt vom Boden des Speicherbehälters bis in eine Höhe von mindestens 80 % der Höhe des Speicherbehälters, besonders bevorzugt bis in eine Höhe zwischen 80 und 95 % der Höhe des Speicherbehälters, so daß nur ein kleiner Teil des Kopfraumes des Behälters, in dem sich das Gas befindet, frei von Einbauten ist.

Die Erfindung sowie weitere Einzelheiten der Erfindung werden im folgenden anhand von in den Zeichnungen schematisch dargestellten Ausführungsbeispielen näher erläutert. Hierbei zeigen:
- Figur 1: einen erfindungsgemäßen Speicherbehälter in der Seitenansicht und
- Figur 2: in der Draufsicht.

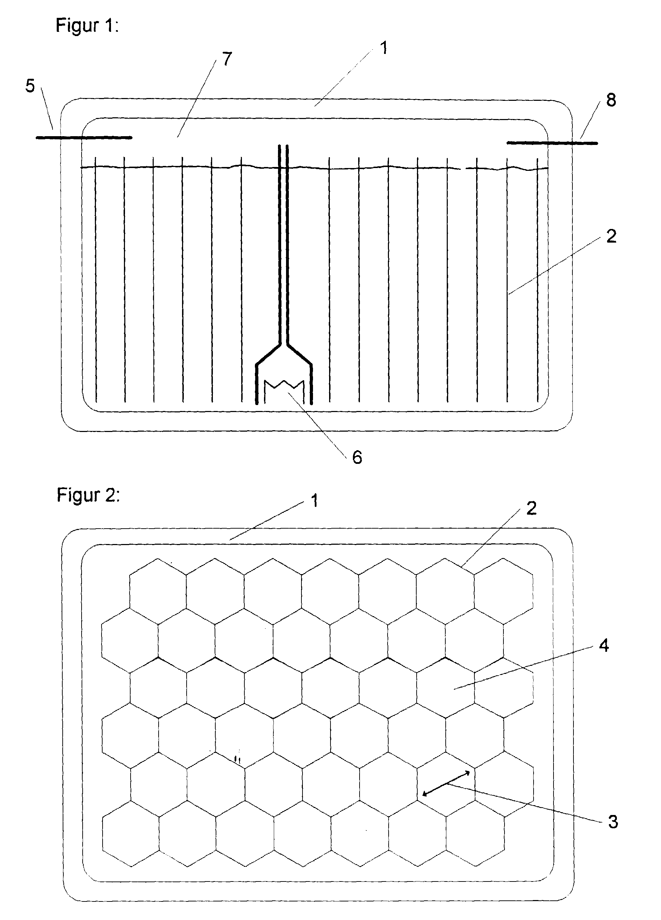

In Figur 1 ist ein Speicherbehälter für ein wasserstoffgetriebenes Fahrzeug mit Brennstoffzellentechnologie dargestellt, welches im Fahrbetrieb Wasserstoff unter einem Druck von 10 bar benötigt. Der Speicherbehälter 1 ist durch eine Vielzahl von senkrecht angeordneten Trennwänden 2 unterteilt, welche so geformt und miteinander verklebt sind, daß sich im Querschnitt eine wabenförmige Struktur ergibt (siehe Figur 2). Die maximale Ausdehnung 3 einer dieser wabenförmigen Zellen 4 in einer Ebene senkrecht zu den Trennwänden 2 beträgt 6 mm. Die Trennwände selbst bestehen aus einem in Harz getränkten Gestrick, welches flüssigkeitsundurchlässig und schlecht wärmeleitend ist.

Um eine möglichst große Menge an Wasserstoff in dem Speicherbehälter 1 speichern zu können, wird der Wasserstoff zunächst bei niedrigem Druck, beispielsweise 1 bis 4 bar, in den Speicherbehälter 1 über die Einspeiseleitung 5 eingebracht. Im Fahrbetrieb wird dann der Druck in dem Behälter 1 durch Verdampfen von Flüssigkeit erhöht.

Hierzu wird ein Teil des flüssigen Wassserstoffs mit der Heizung 6 entweder erwärmt oder verdampft, so daß sich im Gasraum 7 über dem flüssigen Wasserstoff ein erhöhter Druck einstellt. Nach anfänglicher Rückkondensation von gasförmigem Wasserstoff bilden die obersten Flüssigkeitsschichten eine isolierende Schicht, die eine weitere Rückkondensation verhindern. Auf diese Weise ist es möglich, im Gasraum 7 einen Druck von 10 bar, der einer Siedetemperatur von etwa 31 K entspricht, aufrechtzuerhalten, während der flüssige Wasserstoff auf etwa 25 K unterkühlt ist. Die erfindungsgemäße Unterteilung des Speichervolumens 1 in einzelne Zellen 4 verhindert dabei Flüssigkeitsbewegungen in dem Speicherbehälter 1, die zu einer Zerstörung des Temperaturgradienten in dem flüssigen Wasserstoff führen könnten. Der gasförmige Wasserstoff wird über Leitung 8 den Brennstoffzellen zugeführt

Die Erfindung ermöglicht es somit, flüssigen Wasserstoff bei geringer Temperatur zu speichern, um eine möglichst große Befüllmenge des Speicherbehälters zu erreichen, und gleichzeitig Wasserstoff unter hohem Druck von beispielsweise 10 bar zur Verfügung zu stellen.

## Patentansprüche

1. Speichertank, insbesondere für verflüssigte Gase, der durch eine Vielzahl von Trennwänden in Zellen unterteilt ist, **dadurch gekennzeichnet**, daß die Trennwände aus einem schlecht wärmeleitenden Material bestehen und die maximale Ausdehnung der Zellen in einer Ebene senkrecht zu den Trennwänden kleiner als 50 mm ist.

2. Speichertank nach Anspruch 1, dadurch gekennzeichnet, daß die maximale Ausdehnung der Zellen in einer Ebene senkrecht zu den Trennwänden kleiner als 10 mm, bevorzugt kleiner als 5 mm ist.

3. Speichertank nach einem der Ansprüche 1 oder 2, dadurch gekennzeichnet, daß die Trennwände aus Kunststoff oder einem mit Harz versehenen Gewebe bestehen.

4. Speichertank nach einem der Ansprüche 1 bis 3, dadurch gekennzeichnet, daß die Zellen einen dreieckigen, viereckigen, sechseckigen oder runden Querschnitt besitzen.

5. Speichertank nach einem der Ansprüche 1 bis 4, dadurch gekennzeichnet, daß die Trennwände im wesentlichen senkrecht angeordnet sind.

6. Speichertank nach Anspruch 5, dadurch gekennzeichnet, daß sich die Zellen vom Boden des Speicherbehälters bis in eine Höhe zwischen 80 und 95 % der Höhe des Speicherbehälters erstrecken.

7. Verwendung eines Speicherbehälters nach einem der Ansprüche 1 bis 6 zur Aufrechterhaltung eines Temperaturgradienten in einer in dem Speichertank gespeicherten Flüssigkeit.

8. Verwendung eines Speicherbehälters nach einem der Ansprüche 1 bis 6 zur Speicherung von flüssigem Wasserstoff in einem Kraftfahrzeug.
